# EUROPÄISCHE PATENTSCHRIFT

(11) **EP 2 052 010 B1**
(45) Veröffentlichungstag und Bekanntmachung des Hinweises auf die Patenterteilung: **30.12.2009**
(21) Anmeldenummer: 07788158.9
(22) Anmeldetag: 02.08.2007
(51) Int. Cl.: C08G 69/00, F16L 58/10

(54) **VERWENDUNG EINES FORMTEILS AUS EINER POLYAMIDFORMMASSE ALS INLINER FÜR EINE ROHRLEITUNG**
USE OF A SHAPED PART MADE OF A POLYAMIDE SHAPED COMPONENT AS AN INLINER FOR A CONDUIT
UTILISATION D'UNE PIÈCE FAÇONNÉE À PARTIR D'UNE MASSE à MOULER DE POLYAMIDE EN TANT QUE REVÊTEMENT INTERNE POUR UNE CONDUITE

(30) Priorität: 14.08.2006 DE 102006038108
(43) Veröffentlichungstag der Anmeldung: 29.04.2009
(73) Patentinhaber: Evonik Degussa GmbH, 45128 Essen (DE)
(72) Erfinder: DOWE, Andreas, 46325 Borken (DE); GÖRING, Rainer, 46325 Borken (DE); BARON, Christian, 45721 Haltern am See (DE)
(86) Internationale Anmeldenummer: PCT/EP2007/057993
(87) Internationale Veröffentlichungsnummer: WO 2008/019946

(56) Entgegenhaltungen:
- EP-B1- 1 189 970

## Beschreibung

Die Erfindung betrifft die Verwendung eines Inliners aus einer näher spezifizierten Polyamidformmasse für Rohre oder Kanäle (im Folgenden als "Rohrleitungen" bezeichnet), wobei die Rohre oder Kanäle dem Transport von Fernwärme, Frischwasser, Abwasser, Gas oder ähnlichen Medien dienen.

Fernwärme-, Frischwasser-, Abwasser- oder Gasleitungen oder sonstige Medien transportierende Leitungen bzw. Rohre oder Kanäle haben eine begrenzte Standzeit. Vor langer Zeit verlegte Leitungen sind daher häufig schadhaft, so dass z. B. Abwässer in das umliegende Grundwasser austreten oder anstehendes Grundwasser in die Abwasserrohre eintreten kann. Der Grund hierfür sind einerseits die fortschreitenden Korrosionsschäden, andererseits die zunehmende mechanische Belastung, wie sie durch Verkehrserschütterungen, Druckbelastung oder Erdbewegungen im Rahmen von Tiefbaumaßnahmen oder in Bergbaugebieten auftreten. Die in Frage kommenden Rohre bzw. Kanäle liegen rund 1 m tief oder mehr im Erdreich, so dass ein Auswechseln der Rohre oder Kanäle über die gesamte Länge nur mit erheblichem Aufwand möglich wäre. Es besteht daher ein Bedarf an Sanierungsverfahren, mit denen defekte Leitungen des Ver- und Entsorgungsnetzes kostengünstig saniert werden können.

Bei einem bekannten Relining-Verfahren wird ein langer Rohrstrang aus zusammengeschweißten Kunststoffrohren, z. B. aus Polyethylen, in den beschädigten Kanalabschnitt eingeschoben. Da die Rohre wenig flexibel sind, sind hierzu größere Baugruben erforderlich.

Beim sogenannten Kurzrohrrelining werden kurze Kunststoffrohre einer Länge von ca. 0,5 m bis maximal 1 m in vorhandenen Standard-Kanalschächten zusammengesteckt und von diesem Kanalschacht aus in den zu sanierenden Kanalabschnitt eingeschoben oder eingezogen (DE-C 34 13 294).

In der DE-A 27 04 438 wurde vorgeschlagen, Kanalrohre dadurch zu sanieren, dass in das Innere des Abflussrohres eine flexible Polyethylen-Rohrleitung eingeführt wird deren Außendurchmesser kleiner als der Innendurchmesser des Abflussrohres ist, wobei die flexible Rohrleitung mit Abstand zum Abflussrohr unter Bildung eines Ringraumes angeordnet wird. Bei diesem Verfahren wird der Ringraum mit einer aushärtbaren Verfüllmasse niedriger Viskosität ausgefüllt, wobei als Verfüllmasse beispielsweise Magnesiumzement verwendet wird.

Aus der WO 93/21398 und der WO 93/21399 sind Reliningsysteme mit jeweils zwei aus Polyethylen bestehenden Inlinern bekannt. Der innere Inliner ist mit Noppen versehen, die als Abstandshalter dienen.

Darüber hinaus lehrt die WO 96/06298, einen mit Distanzelementen versehenen Inliner aus Polycthylen oder Polypropylen in die zu sanierenden Leitungen bzw. Rohre einzuführen und den Zwischenraum dann mit einer aushärtbaren Masse bzw. einem aushärtenden Kunststoffmaterial zu verfüllen. Zur Verbesserung der Haftung dieses Kunststoffmaterials auf dem Inliner wird eine Grundierung empfohlen.

Aus der WO 00/40887 ist ein Rohrleitungssystem mit kontrollierter Dichtungsfunktion bekannt, das ein eigensteifes fluiddichtes Rohr und einen flexiblen Kontroll-Inliner umfasst, die beide aus Polyethylen bestehen und bei dem der Kontroll-Inliner zusätzlich eine Permeationssperre für Kohlenwasserstoffe in Form einer Aluminiumfolie enthält. Derartige Systeme sind in der Herstellung jedoch aufwendig.

Die im Stand der Technik vorherrschenden Inliner aus Polyethylen besitzen eine Reihe von Nachteilen. So ist beispielsweise ihr Quell- und Diffusionsverhalten schlecht, insbesondere dann, wenn organische Flüssigkeiten wie Rohöl, Petrochemikalien oder Abwasser, das organische Flüssigkeiten wie z. B. Lösemittel enthält, gefördert werden. Das Diffusionsverhalten ist auch bei Gasleitungen nachteilig. Polyethylen ist darüber hinaus spannungsrissempfindlich, z. B. bei Kontakt mit Tensiden, sowie kerbempfindlich. Darüber hinaus hat Polyethylen ohne aufwendige Vorbehandlung kein ausreichendes Haftungsvermögen gegenüber aushärtenden Kunststoffmaterialien, die zum Verfüllen des Ringraums verwendet werden. Zudem kann es beim Aushärten des Verfüllmaterials, z. B. bei PU-Harzen, zu Temperaturspitzen kommen, die den Inliner zu stark erweichen lassen, so dass Einwölbungen entstehen. Aufgrund des niedrigen Erweichungspunktes und der mangelnden Medienheständigkeit von Polyethylen sind Inliner aus diesem Material nur bei Betriebstemperaturen bis maximal 65 °C einsetzbar.

Eine andere technische Lösung wird beispielsweise in der DE-C 23 62 784 beschrieben. Dort wird ein System offenbart, bei dem ein einseitig mit Kunststoff beschichteter Vliesschlauch mit Harz und Härter vorab so getränkt wird, dass er nach dem Einbringen in die zu sanierende Rohrleitung im Umstülpverfahren und nach Anpressen an die Rohrwandung mittels Wasserdruck durch Erwärmung des Systems aushärtet und so ein neues Leitungssystem mit steifer Rohrwand darstellt. Da das Harz-Härter-System im Trägervlies nur eine begrenzte Verarbeitungszeit (Topfzeit) hat, muss die Tränkung, der Transport zur Baustelle (eventuell im Kühlwagen) und das Einbringen innerhalb einer relativ kurzen Zeitspanne erfolgen. Dieses Verfahren ist zudem nur befriedigend anwendbar für zu sanierende Rohre, die keine größeren Risse oder Löcher aufweisen, da durch diese das Harz vor der Aushärtung austreten kann.

Seit einiger Zeit werden versuchsweise Inliner aus Polyamid im Offshore-Bereich in Stahlrohren eingesetzt, mit denen Rohöl oder Rohgas gefördert wird (J. Mason, Oil & Gas Journal, Oct. 18, 1999, S. 76-82). Dieser Einsatz beschränkt sich jedoch auf Rohre mit geringen Innendurchmessern. Zwar wäre Polyamid hier ein geeignetes Inlinermaterial, jedoch lassen sich großdimensionale Rohre aus Polyamid in ausreichender Qualität nicht durch Extrusion herstellen. Bei der Extrusion großdimensionaler Rohre kann es nämlich, unter anderem bedingt durch die Gravitationskraft, nach dem Austritt aus dem Werkzeug zu diversen Schwierigkeiten kommen. Ein Durchhängen des austretenden Schmelzeschlauches ist hier ein optisches Zeichen für eine niedrige Schmelzeviskosität. Die Schwerkraft führt zu einer Verschiebung der Wanddicken, so dass eine unregelmäßige Verteilung der Wanddicke des Rohrs auftreten kann. Die Schmelzesteifigkeit herkömmlicher Polyamide reicht nicht aus, um die gewünschte Geometrie technisch, wirtschaftlich, maßhaltig und zuverlässig herstellen zu können. Eine niedrige Schmelzesteifigkeit führt darüber hinaus zu einem unruhigen, instabilen Extrusionsverlauf, der sich dadurch äußern kann, dass der Schmelzestrang unruhig in die Kalibriereinheit einläuft. Dies kann zu Produktionsstörungen führen. Besitzt der Schmelzeschlauch nach Verlassen der Düse hingegen eine hohe Schmelzesteifigkeit, läuft er deutlich stabiler und wird unempfindlicher gegenüber äußeren Extrusionseinflüssen.

Die Extrusion einer Polyamidformmasse mit hoher Schmelzesteifigkeit ist wegen der hohen Viskosität jedoch schwierig. Hierfür ist ein außerordentlich hoher Druckaufbau in der Maschine notwendig; trotzdem können auch dann großdimensionale Geometrien nicht bei wirtschaftlich sinnvollen Extrusionsgeschwindigkeiten hergestellt werden, da schon bei kleineren Durchsätzen eine sehr hohe Motorlast vorliegt.

Die Aufgabe der vorliegenden Erfindung bestand darin, diese Nachteile zu vermeiden und einen Inliner für Rohrleitungen zu Verfügung zu stellen, der einerseits bessere Eigenschaften als die üblicherweise verwendeten Materialien auf Basis von Polyethylen oder GfK besitzt und der andererseits auch in großen Dimensionen zuverlässig und mit gleichmäßiger Wanddicke hergestellt werden kann.

Diese Aufgabe wurde gelöst durch die Verwendung eines Formteils als Inliner für eine Rohrleitung, wobei das Formteil aus einer Polyamidformmasse besteht, die durch Zusatz einer Verbindung mit mindestens zwei Carbonateinheiten in einem Mengenverhältnis von 0,005 bis 10 Gew.-%, bezogen auf das Polyamid, aufkondensiert wurde, wobei
a) eine Ausgangs-Polyamidformmasse bereitgestellt wurde,
b) eine Vormischung der Ausgangs-Polyamidformmasse und der Verbindung mit mindestens zwei Carbonateinheiten hergestellt wurde,
c) die Vormischung gegebenenfalls gelagert und/oder transportiert wurde und
d) die Vormischung anschließend zum Formteil verarbeitet wurde, wobei erst in diesem Schritt die Aufkondensation erfolgte
und wobei das Formteil ein Rohr oder Schlauch mit einem Außendurchmesser von mindestens 25 mm, bevorzugt mindestens 60 mm und insbesondere bevorzugt mindestens 110 mm ist.

Überraschenderweise wurde festgestellt, dass bei dieser Zugabeweise während der Verarbeitung eine signifikante Erhöhung der Schmelzesteifigkeit eintritt, bei gleichzeitig geringer Motorlast. Somit können trotz hoher Schmelzeviskosität hohe Durchsätze bei der Verarbeitung erzielt werden, woraus eine Verbesserung der Wirtschaftlichkeit des Herstellverfahrens resultiert. Die fragliche Rohrleitung kann eine Transportleitung, eine Verteilungsleitung oder eine Hausanschlussleitung sein und entweder als Druckleitung oder als Freispiegelleitung ausgeführt sein Sie dient beispielsweise dem Transport von Fernwärme, Frischwasser Abwasser, Gas, Ölen wie beispielsweise Rohöl, Leichtöl oder Schweröl, Kraftstoffen wie beispielsweise Kerosin oder Diesel, Petrochemikalien, Sole, Laugen, abrasiven Medien oder Stäuben und kann beispielsweise eine Ver- oder Entsorgungsleitung sein. Sie ist vorzugsweise im Erdreich, in Tunneln oder Stollen oder im Wasser, unter Umständen aber auch oberirdisch verlegt.

Im Rahmen der Erfindung kann die Rohrleitung bereits werksseitig oder beim Verlegen mit dem Inliner ausgestattet werden, um die Standzeiten im Betrieb zu verlängern. In den meisten Fällen wird der Inliner jedoch nachträglich in die Transportleitung eingebracht, um die Leitung zu sanieren; man spricht hier von Relining.

Die in Frage kommenden Rohrleitungen haben in der Regel einen Innendurchmesser von bis zu 4000 mm, vorzugsweise bis zu 2000 mm und besonders bevorzugt bis zu 1000 mm.

Gegenstand der Erfindung ist auch eine Rohrleitung, die einen derartigen Inliner enthält.

In einer möglichen Ausführungsform ist die anspruchgemäße Rohrleitung keine Offshore-Leitung.

Der Inliner kann selbsttragend sein; er ist in diesem Fall ein Rohr. Er kann jedoch auch nicht selbsttragend sein; in diesem Fall ist er ein Schlauch. Die Wanddicke beträgt im Allgemeinen mindestens 0,5 mm, bevorzugt mindestens 1 mm und besonders bevorzugt mindestens 2 mm. Ein im Sinne der Erfindung geeignetes Polyamid ist auf Basis von Lactamen, Aminocarbonsäuren, Diaminen bzw. Dicarbonsäuren aufgebaut. Es kann darüber hinaus verzweigend wirkende Bausteine enthalten, die beispielsweise von Tricarbonsäuren, Triaminen oder Polyethylenimin abgeleitet sind. Geeignete Typen sind, jeweils als Homopolymer oder als Copolymer, beispielsweise PA6, PA46, PA66, PA610, PA66/6, PA6/6T, PA66/6T sowie insbesondere PA612, PA1010, PA1012, PA1212, PA613, PA1014, PA11, PA12 oder ein transparentes Polyamid.

Weiterhin sind Polyetheramide auf der Basis von Lactamen, Aminocarbonsäuren, Diaminen, Dicarbonsäuren und Polyotherdiaminen und/oder Polyetherdiolen geeignet.

Bevorzugt haben die Ausgangspolyamide Molekulargewichte Mₙ von größer als 5000, insbesondere von größer als 8000. Hierbei werden Polyamide eingesetzt, deren Endgruppen zumindest teilweise als Aminogruppen vorliegen. Beispielsweise liegen mindestens 30 %, mindestens 40 %, mindestens 50 %, mindestens 60 %, mindestens 70 %, mindestens 80 % oder mindestens 90 % der Endgruppen als Aminoendgruppen vor. Die Herstellung von Polyamiden mit höherem Aminoendgruppengehalt unter Verwendung von Diaminen oder Polyaminen als Regler ist Stand der Technik. Im vorliegenden Fall wird bei der Herstellung des Polyamids bevorzugt ein aliphatisches, cycloaliphatisches oder araliphatisches Diamin mit 4 bis 44 C-Atomen als Regler eingesetzt. Geeignete Diamine sind beispielsweise Hexamethylendiamin, Decamethylendiamin, 2.2.4- bzw. 2.4.4-Trimethylhexamethylendiamin, Dodecamethylendiamin, 1.4-Diaminocyclohexan, 1.4- oder 1.3-Dimethylaminocyclohexan, 4.4'-Diaminodicyclohexylmethan, 4.4'-Diamino-3.3'-dimethyldicyclohexylmethan, 4.4'-Diaminodicyclohexylpropan, Isophorondiamin, Metaxylylendiamin oder Paraxylylendiamin.

In einer weiteren bevorzugten Ausführungsform wird bei der Herstellung des Polyamids ein Polyamin als Regler und gleichzeitig Verzweiger eingesetzt. Beispiele hierfür sind Diethylentriamin, 1.5-Diamino-3-(β-aminoethyl)pentan, Tris(2-aminoethyl)amin, N,N-Bis(2-aminoethyl)-N',N'bis[2-[bis(2-aminoethyl)amino]-ethyl]-1,2-ethandiamin, Dendrimere sowie Polyethylenimine, insbesondere verzweigte Polyethylenimine, die durch Polymerisation von Aziridinen erhältlich sind (Houben-Weyl, Methoden der Organischen Chemie, Band E20, Seiten 1482 - 1487, Georg Thieme Verlag Stuttgart, 1987) und die in der Regel folgende Aminogruppenverteilung besitzen:
25 bis 46 % primäre Aminogruppen,
30 bis 45 % sekundäre Aminogruppen und
16 bis 40 % tertiäre Aminogruppen.

Im erfindungsgemäßen Verfahren wird mindestens eine Verbindung mit mindestens zwei Carbonateinheiten in einem Mengenverhältnis von 0,005 bis 10 Gew.-% eingesetzt, berechnet im Verhältnis zum eingesetzten Polyamid. Vorzugsweise liegt dieses Verhältnis im Bereich von 0,01 bis 5,0 Gew.-%, besonders bevorzugt im Bereich von 0,05 bis 3 Gew.-%. Der Begriff "Carbonat" bedeutet hier Ester der Kohlensäure insbesondere mit Phenolen oder Alkoholen.

Die Verbindung mit mindestens zwei Carbonateinheiten kann niedermolekular, oligomer oder polymer sein. Sie kann vollständig aus Carbonateinheiten bestehen oder sie kann noch weitere Einheiten aufweisen. Diese sind vorzugsweise Oligo- oder Polyamid-, -ester-, -ether-, -etherestcramid- oder -etheramideinheiten. Solche Verbindungen können durch bekannte Oligo- oder Polymerisationsverfahren bzw. durch polymeranaloge Umsetzungen hergestellt werden.

In einer bevorzugten Ausführungsform handelt es sich bei der Verbindung mit mindestens zwei Carbonateinheiten um ein Polycarbonat, beispielsweise auf Basis von Bisphenol A, bzw. um ein Blockcopolymeres, das einen derartigen Polycarbonatblock enthält.

Die Eindosierung der als Additiv verwendeten Verbindung mit mindestens zwei Carbonateinheiten in Form eines Masterbatches ermöglicht eine genauere Dosierung des Additivs, da größere Mengen verwendet werden. Es stellte sich zudem heraus, dass durch die Verwendung eines Masterbatches eine verbesserte Extrudatqualität erzielt wird. Das Masterbatch umfasst als Matrixmaterial bevorzugt das Polyamid, das auch im erfindungsgemäßen Verfahren aufkondensiert wird, oder ein damit verträgliches Polyamid, jedoch können auch unverträgliche Polyamide unter den Reaktionsbedingungen eine partielle Anbindung an das aufzukondensierende Polyamid erfahren, was eine Kompatibilisierung bewirkt. Das als Matrixmaterial im Masterbatch verwendete Polyamid hat bevorzugt ein Molekulargewicht Mₙ von größer als 5000 und insbesondere von größer als 8000. Hierbei sind diejenigen Polyamide bevorzugt, deren Endgruppen überwiegend als Carbonsäuregruppen vorliegen. Beispielsweise liegen mindestens 80 %, mindestens 90 % oder mindestens 95 % der Endgruppen als Säuregruppen vor.

Die Konzentration der Verbindung mit mindestens zwei Carbonateinheiten im Masterbatch beträgt vorzugsweise 0,15 bis 50 Gew.-%. besonders bevorzugt 0,2 bis 25 Ges.-% und insbesondere bevorzugt 0,3 bis 15 Gew.-%. Die Herstellung eines solchen Masterbatches erfolgt in der üblichen, dem Fachmann bekannten Weise.

Geeignete Verbindungen mit mindestens zwei Carbonateinheiten sowie geeignete Masterbatches sind in der WO 00/66650, auf die hier ausdrücklich Bezug genommen wird, ausführlich beschrieben.

Ein auf diesem Prinzip beruhendes Additiv zur Molekulargewichtseinstellung bei Polyamiden wird von der Fa. Brüggemann KG unter der Bezeichnung Brüggolen M 1251 vertrieben. Primäre Anwendungen liegen im Bereich der Viskositätseinstellung für Recyclat aus PA6 oder PA66, das in Extrusionsformmassen wiederverwertet wird. Bei dem Additiv Brüggolen M1251 handelt es sich um ein Masterbatch eines niedrigviskosen Polycarbonats, beispielsweise Lexan 141, in einem säureterminierten PA6. Für den Molekulargewichtsaufbau ist eine Reaktion der im aufzukondensierenden Material enthaltenen Aminoendgruppen mit dem Polycarbonat ursächlich.

Die Wirksamkeit der Methode wird in der WO 00/66650 am Beispiel der Aufkondensierung von PA6 und PA66 gezeigt, wobei die entsprechenden Polykondensate teilweise in reiner Form eingesetzt werden, teilweise aber auch Zuschlagstoffe wie z. B. Glasfasern und Montanat enthalten.

Die Erfindung ist anwendbar bei Polyamiden, die herstellungsbedingt mindestens 5 ppm Phosphor in Form einer sauren Verbindung enthalten. In diesem Fall wird der Polyamidformmasse vor der Compoundierung oder bei der Compoundierung 0,001 bis 10 Gew.-%, bezogen auf das Polyamid, eines Salzes einer schwachen Säure zugegeben. Geeignete Salze sind in der DE-A 103 37 707 offenbart, auf die hiermit ausdrücklich Bezug genommen wird.

Die Erfindung ist jedoch genauso gut anwendbar bei Polyamiden, die herstellungsbedingt weniger als 5 ppm Phosphor oder gar keinen Phosphor in Form einer sauren Verbindung enthalten. In diesem Fall kann zwar, muss aber nicht ein entsprechendes Salz einer schwachen Säure zugegeben werden.

Im erfindungsgemäßen Verfahren können die üblichen Zuschlagstoffe verwendet werden, die bei der Herstellung von Polyamidformmassen Verwendung finden. Illustrative Beispiele hierfür sind Färbemittel, Flammverzögerer und -schutzmittel, Stabitisatoren, Füllstoffe, Gleitfähigkeitsverbesserer, Formentrennmittel, Schlagzähmodifikatoren, Weichmacher, Kristallisationsbeschleuniger, Antistatika, Schmiermittel, Verarbeitungshilfsmittel sowie weitere Polymere, die mit Polyamiden üblicherweise compoundiert werden.

### Beispiele dieser Zuschlagstoffe sind wie folgt:

Färbemittel: Titandioxid, Bleiweiß, Zinkweiß, Liptone, Antimonweiß, Ruß, Eisenoxidschwarz, Manganschwarz, Kobaltschwarz, Antimonschwarz, Bleichromat, Mennige, Zinkgelb, Zinkgrün, Cadmiumrot, Kobaltblau, Berliner Blau, Ultramarin, Manganviolett, Cadmiumgelb, Schweinfurter Grün, Molybdänorange und -rot, Chromorange und -rot, Eisenoxidrot, Chromoxidgrün, Strontiumgelb, Molybdänblau, Kreide, Ocker, Umbra, Grünerde, Terra di Sicna gebrannt, Graphit oder lösliche organische Farbstoffe.

Flammverzögerer und Flammschutzmittel: Antimontrioxid, Hexabromcyclododecan, Tetrachlor- oder Tetrabrombisphenol und halogenierte Phosphate, Borate, Chlorparaffine sowie roter Phosphor, ferner Stannate, Melamincyanurat und dessen Kondensationsprodukte wie Melam, Metern, Melon, Melaminverbindungen wie Melaminpyro- und -polyphosphat, Ammoniumpolyphosphat, Aluminiumhydroxid, Calciumhydroxid sowie phosphororganische Verbindungen, die keine Halogene enthalten wie beispielsweise Resorcinoldiphenylphosphat oder Phosphonsäureester.

Stabilisatoren: Metallsalze, insbesondere Kupfersalze und Molybdänsalze sowie Kupferkomplexe, Phosphite, sterisch gehinderte Phenole, sekundäre Amine, UV-Absorber und HALS-Stabilisatoren.

Füllstoffe: Glasfasern, Glaskugeln, Mahlglasfaser, Kieselgur, Talkum, Kaolin, Tone, CaF₂, Aluminiumoxide sowie Kohlefasern.

Gleitfähigkeitsverbesserer und Schmiermittel: MoS₂, Paraffine, Fettalkohole sowie Fettsäureamide.

Formentrennmittel und Verarbeitungshilfsstoffe: Wachse (Montanate), Montansäurewachse, Montanesterwachse, Polysiloxane, Polyvinylalkohol, SiO₂, Calciumsilikate sowie Perfluorpolyether.

### Weichmacher: BBSA, POBO.

Schlagzähmodifikatoren: Polybutadien, EPM, EPDM, HDPE, Acrylatkautschuk.

Antistatika: Ruß, Carbonfasern, Graphitfibrillen, mehrwertige Alkohole, Fettsäureester, Amine, Säureamide, quarternäre Ammoniumsalze.

Weitere Polymere: ABS, Polypropylen.

Diese Zuschlagstoffe können in den üblichen, dem Fachmann bekannten Mengen verwendet werden.

Die Verbindung mit mindestens zwei Carbonateinheiten wird als solche oder als Masterbatch erfindungsgemäß erst nach der Compoundierung, aber spätestens während der Verarbeitung zugegeben. Bevorzugt mischt man bei der Verarbeitung das aufzukondensierende Polyamid bzw. die aufzukondensierende Polyamidformmasse als Granulat mit dem Granulat der Verbindung mit mindestens zwei Carbonateinheiten oder dem entsprechenden Masterbatch. Es kann aber auch eine Granulatmischung der fertig compoundierten Polyamidformmasse mit der Verbindung mit mindestens zwei Carbonateinheiten bzw. dem Masterbatch hergestellt, anschließend transportiert oder gelagert und danach verarbeitet werden. Entsprechend kann natürlich auch mit Pulvermischungen verfahren werden. Entscheidend ist, dass die Mischung erst bei der Verarbeitung aufgeschmolzen wird. Eine gründliche Vermischung der Schmelze bei der Verarbeitung ist empfehlenswert. Das Masterbatch kann genauso gut jedoch auch als Schmelzestrom mit Hilfe eines beigestellten Extruders in die Schmelze der zu verarbeitenden Polyamidformmasse zudosiert und dann gründlich eingemischt werden.

Das Verfahren zur Hersteliung des Inliners ist in allgemeiner Form in der EP 1 690 889 A1 und der EP 1 690 890 A1 beschrieben.

Die Wandung des Inliners kann entweder einschichtig sein und in diesem Fall vollständig aus der Polyamidformmasse bestehen, sie kann aber auch mehrschichtig sein, wobei die Polyamidformmasse die Außenschicht, die Innenschicht und/oder die Mittelschicht bilden kann. Die andere Schicht bzw. die anderen Schichten bestehen aus Formmassen auf Basis anderer Polymerer, beispielsweise von Polyethylen, Polypropylen oder Fluorpolymeren. Derartige Mehrschichtstrukturen können gemäß dem Stand der Technik unter anderem durch Coextrusion hergestellt werden.

Der Inliner kann, wie in der WO 96/06298 beschrieben, zusammen mit Distanzelementen in die Leitung eingebracht werden, wonach der Ringraum zwischen Inliner und Leitungswand mit einer aushärtenden Masse verfüllt wird, vorzugsweise mit einem Mörtel oder mit einem aushärtenden Kunststoffmaterial. Der Inliner kann jedoch dann, wenn er ein selbsttragendes Rohr ist, gegebenenfalls auch ohne Distanzelemente und ohne den Ringraum zu verfüllen in die Leitung eingebracht werden.

Durch eine geeignete Mörtelzusammensetzung kommt es zu einer homogenen Kornverteilung und hohen Dichtheit des Verfüllmaterials. Besonders bevorzugt werden alkalisch reagierende Mörtel, da diese Eisenrohre nicht nur passiv schützen, sondern auch aktiv aufgrund der alkalischen Reaktion. Geeignete Mörtel sind Stand der Technik.

Für das erfindungsgemäße Verfahren geeignete härtbare Kunststoffmaterialien sind solche, die eine ausreichende Beständigkeit gegenüber dem zu transportierenden Medium aufweisen. Dies bedeutet insbesondere, dass die Kunststoffmaterialien nach der Aushärtung vor allem wasser-und gasdicht sein müssen und durch Feuchtigkeit nicht angegriffen werden dürfen.

Besonders geeignete Kunststoffmaterialien für das erfindungsgemäße Verfahren sind Polyurethan-Systeme, Silikatharze, Acrylsysteme, Epoxidsysteme und Systeme auf Basis ungesättigter Polyester, die alle auf dem einen oder anderen Weg zur Aushärtung befähigt sind. Ein Vorteil aller dieser Systeme ist ihre geringe Feuchtigkeitsempfindlichkeit.

Geeignete Polyurethan-Systeme beruhen auf Polyurethanpräpolymeren mit einem Rest reaktionsfähiger Isocyanatgruppen, die aus monomeren oder polymeren mehrfunktionelien Isocyanaten und mehrfunktionellen Reaktionspartnern, in der Regel Polyolen, Polyetherolen oder Polyesterolen hergestellt sind. Die Präpolymeren werden zur Aushärtung mit mehrfunktionellen Reaktionspartnern mit mindestens zwei freien, zur Umsetzung mit den Isocyanatgruppen verfügbaren OH-, SH- und/oder NH₂-Gruppen und ggf. den aus der Polyurethanchemie dem Fachmann bekannten, die Reaktion aktivierenden Zusatzmitteln umgesetzt. Beispielsweise seien hier genannt Wasser, Polyole, wie Ethylenglykol, Propylenglykol oder deren Oligomere, Polyesterole, Polyetherole, multifunktionelle Thiole oder Polyamine und deren Mischungen. Die Härtung beschleunigende Zusätze sind beispielsweise tertiäre Amine oder Metallsalze. Es handelt sich hierbei um Zweikomponentensysteme.

Silikatharze besitzen einerseits eine Wasserglas-, andererseits eine Isocyanatkomponente. Sie können schäumend oder nicht schäumend eingestellt sein. Ihre chemische Beständigkeit übertrifft die von Polyurethanen und Epoxidharzen.

Des weiteren können Acryl-Systeme eingesetzt werden, d. h. Reaktionsprodukte, die durch radikalische Polymerisation ein- oder mehrfunktioneller monomerer oder oligomerer Derivate der Acryl- oder Methacrylsäure hergestellt werden. Insbesondere sind hier die Ester der Acryl-und Methacrylsäure zu nennen. Die Polymerisation kann durch Einmischen von Reaktionsstartern in die Ausgangsmischung eingeleitet werden, beispielsweise von Radikalstartern auf Peroxidbasis oder dergleichen. Des weiteren kann die Aushärtung bzw. Vernetzung durch energiereiche Strahlung eingeleitet werden, beispielsweise UV-Licht oder Elektronenstrahlung. Es versteht sich, dass unter Acryl-Systemen auch Copolymerisate von (Meth)acrylsäure und deren Derivaten verstanden werden.

Erfahrungsgemäß können ferner Epoxidharz-Systeme zum Einsatz kommen, d. h. Reaktionsprodukte aus höhermolekularen Verbindungen mit mindestens zwei reaktionsfähigen Epoxidgruppen und mehrfunktionellen Polyaminen, Polyaminoamiden oder Gemischen dieser Stoffe, denen aus der Epoxidchemie bekannte Reaktionsbeschleuniger zugesetzt werden können. Die Polyamine übernehmen dabei die Funktion der Härterkomponente.

Weiterhin kommen Systeme auf Basis ungesättigter Polyester in Frage, d. h. Reaktionsprodukte der radikalischen Polymerisation ungesättigter Polyester. Solche ungesättigten Polyester ergeben sich aus der Umsetzung mehrfunktioneller Alkohole mit ein- oder mehrfach ungesättigten mehrfunktionellen Carbonsäuren. Diese ungesättigten Polyester können in zu radikalischer Polymerisation befähigten Monomeren gelöst werden, beispielsweise Styrol oder Divinylbenzol, aber auch in Diallylphthalat und monomeren Acrylsäure- oder Methacrylsäurederivaten, etwa Estern, wie Methylacrylat oder Methylmethacrylat. Die Polymerisation wird durch Zumischen geeigneter Reaktionsstarter in die Harzmischung und/oder durch die Zufuhr von Energie (Wärme) oder energiereicher Strahlung (UV-Licht oder Elektronenstrahlung) gestartet.

Alle diese Systeme können übliche Zusatzstoffe enthalten, beispielsweise Füllstoffe, Fasern, Farbstoffe, Stabilisatoren, Viskositätsregulierer und dergleichen. Sie können ferner durch Zusatz von Treibmitteln so modifiziert sein, dass sich während der Abbindereaktion eine ganz oder teilweise zellige Struktur ausbildet, um Hohlräume zu verfüllen, die sich auf die Außenseite der Rohrleitung erstrecken. Insbesondere der Zusatz von die Dauerhaftigkeit und Festigkeit der Kunststoffverfüllung erhöhenden Materialien, beispielsweise mineralischen Füllstoffen und/oder verstärkenden Fasern, kann ausgesprochen zweckmäßig sein.

Als Füllstoffe kommen insbesondere solche mineralischer Natur in Frage, beispielsweise Quarzsand, Elektrofilterasche und dergleichen. Die mineralischen Zuschläge können 2 bis 95 Gew.-% des Kunststoffmaterials ausmachen, insbesondere 50 bis 90 Gew.-%. Als besonders geeignet hat sich eine Mischung aus 1 Teil Epoxidharz und 5 Teilen Quarzsand erwiesen, wobei dem Epoxidharz ein übliches Treibmittel zur Ausbildung eines feinporigen geschlossenzelligen Schaums mit einer Dichte im Bereich von 0,8 bis 2,0 g/cm³, je nach Füllgrad, zugemischt ist.

Zusätzlich zu mineralischen Füllstoffen oder alternativ dazu können Fasern in einer zur Erhöhung der Festigkeit erforderlichen Menge im Kunststoffmaterial vorhanden sein. Beispiele für geeignete Fasern sind Polypropylen-Stapelfasern, Stahlfasern oder mineralische Fasern, wie beispielsweise Glas- oder Steinwolle. Im Allgemeinen sind Faseranteile von 0,5 bis 5 Gew.-% im Kunststoffmaterial vollständig ausreichend.

Es versteht sich, dass die zum Einsatz kommenden Kunststoffmaterialien und Härter an und für sich bekannt sind.

Das Verfüllmaterial kann in den Ringraum eingepresst bzw. eingesaugt werden. Vorteilhaft wird eine Kombination dieser Maßnahmen vorgenommen, indem am einen Ende der Leitung das Material eingepresst wird, während am anderen Ende Unterdruck angelegt wird. Der Inliner sollte dabei mit Druck beaufschlagt werden, damit er nicht kollabiert.

Soweit das auf die Wandung der Leitung aufgebrachte Kunststoffmaterial unmittelbar mit einem Härter versetzt wird, erfolgt die Härtung über den für das Material typischen Zeitraum ohne weitere äußere Einflussnahme. Erfolgt die Aushärtung des Kunststoffmaterials durch Strahlung oder Wärmezufuhr, ist es erforderlich, im Anschluss an die Aufbringung des Kunststoffmaterials die Schicht zu bestrahlen oder mit Wärme zu beaufschlagen, was durch den Inliner hindurch erfolgen kann.

In einer weiteren möglichen Ausführungsform kann der Rohrliner auch einen etwas größeren Außendurchmesser als das auszukleidende Rohr aufweisen. Um den Inliner einzubringen, wird dieser dann in seinem Querschnitt durch Verstrecken, Stauchen oder Falten reduziert. Nach dem Einbringen des Inliners legt sich dieser durch Rückstellung an die Rohrinnenwandung an. Dieser Vorgang kann durch Druck- und Temperaturbeaufschlagung unterstützt werden. Das so ausgckleidete Rohr weist keinen Ringraum auf. Als Beispiel eines dem Fachmann bekannten Verfahrens sei das Swagelining^{™} genannt. Der Inliner kann auf diese Weise auch bereits werksseitig eingebracht werden.

In einer anderen möglichen Ausführungsform der Erfindung wird ein anspruchsgemäßes Innenrohr in einen zu sanierenden Rohr- oder Kanalabschnitt eingeführt, das zum Einführen gefaltet und danach mit seinen der Außenwand zugeordneten Abstandshaltern an die Wand des Rohres oder des Kanals angelegt wird, woraufhin der Zwischenraum zwischen der Wand des Rohres oder des Kanals und der Außenwand des Innenrohres verfüllt wird, indem das im eingesetzten Zustand eigenstabile Innenrohr, eine Art Transportmuldenband ergebend, vor oder beim Einführen in den Rohr- oder Kanalabschnitt gefaltet und der entstandene Transportraum bzw. die Mulde mit einem verzögernd aushärtenden Verfüllmaterial gefüllt wird, wobei das Rückverformen des Innenrohres nach Erreichen der Endposition durch Auffüllen seines Innenraumes mit einem Medium unterstützt wird.

Mit einem derartigen Verfahren ist somit erstmals möglich, das die eigentliche Sanierung bewirkende Innenrohr zugleich mit dem benötigten Verfüllmaterial, also dem Kunststoff, in den zu sanierenden Rohrabschnitt einzuführen und dort am jeweils vorgesehenen Einsatzort das Verfüllmaterial in den sich bildenden Zwischenraum hineinzubringen und dabei gleichzeitig auch entstandene Hohlräume im Erdreich mit zu verfüllen. In der Mulde des Transportbandes, das aus dem gefalteten Innenrohr besteht, kann eine ausreichende Menge dieses Verfüllmaterials eingebracht werden, wobei durch Rückverformen des Innenrohres dann eine gleichmäßige Verteilung des Verfüllmaterials über den gesamten Umfang bewirkt wird.

Mit Hilfe der Erfindung lässt sich eine sehr langlebige Sanierung bzw. Versiegelung einer Rohrleitung erzielen.

Im Folgenden soll die erfindungsgemäße Herstellung eines Inliners beispielhaft erläutert werden. In den Versuchen wurden folgende Materialien eingesetzt:

| | |
|---|---|
| Amingeregeltes PA12 | mit 50 mäq/kg NH₂-Gruppen und 9 mäq/kg COOH-Gruppen, ηᵣₑₗ ca. 2,15. Enthält herstellungsbedingt 54,5 ppm Phosphor. |
| Säuregeregeltes PA12 | mit 8 mäq/kg NH₂-Gruppen und 50 mäq/kg COOH-Gruppen, ηᵣₑₗ ca. 2,15. Enthält herstellungsbedingt 54,5 ppm Phosphor. |
| Brüggolen^{®} M1251, | eine Mischung aus einem niederviskosen Polycarbonat und einem säureterminierten PA6. |
| Ceasit^{®} PC | (Calciumstearat). |

Auf einem Zweischneckenextruder vom Typ Werner & Pfleiderer ZSK 30 wurden die in der Tabelle 1 angegebenen Compounds hergestellt.

### Vergleichsbeispiele A und B sowie Beispiel 1:

Auf einem 50er Reifenhäuser Einschneckenextruder mit Dreizonenschnecke (L = 25 D) wurden die in der Tabelle 2 angegebenen Einsatzstoffe ausgehend vom Granulat bzw. einer Granulatmischung verarbeitet und als Liner mit einer Wandstärke von 2,9 mm und einem Außendurchmesser von 32 mm extrudiert. Bei der Gegenüberstellung des Vergleichsbeispiels B und des Beispiels 1 erkennt man, dass erfindungsgemäß trotz größerem Massedruck eine deutlich niedrigere Motorlast nötig war, um ein Rohr aus einem sehr hochmolekularen Polyamid herzustellen.

### Vergleichsbeispiele C und D sowie Beispiel 2:

Auf einem 90er Reifenhäuser Einschneckenextruder mit Dreizonenschnecke (L = 30 D) wurden die in der Tabelle 3 angegebenen Einsatzstoffe ausgehend vom Granulat bzw. einer Granulatmischung verarbeitet und als Liner mit einer Wandstärke von 15,3 mm und einem Außendurchmesser von 168,3 mm extrudiert. Bei der Gegenüberstellung des Vergleichsbeispiels D und des Beispiels 2 erkennt man, dass erfindungsgemäß trotz größerem Massedruck eine deutlich niedrigere Motorlast nötig war, um ein Rohr aus einem sehr hochmolekularen Polyamid herzustellen.

### Vergleichsbeispiele E und F sowie Beispiel 3:

Auf einem 60er Cincinnati Einschneckenextruder mit Dreizonenschnecke (L = 30 D) wurden die in der Tabelle 4 angegebenen Einsatzstoffe ausgehend vom Granulat bzw. einer Granulatmischung verarbeitet und als Liner mit einer Wandstärke von 2,0 mm und einem Außendurchmesser von 285 mm extrudiert. Bei der Gegenüberstellung des Vergleichsbeispiels F und des Beispiels 3 erkennt man, dass erfindungsgemäß trotz größerem Massedruck eine deutlich niedrigere Motorlast nötig war, um ein Rohr aus einem sehr hochmolekularen Polyamid herzustellen.

Beim direkten Einsatz des Compound B verringert sich ηᵣₑₗ (als Maßstab für das Molekulargewicht) von anfangs 2,55 auf 2,30 bis 2,34 (Vergleichsbeispiele B, D und F) durch Kettenabbau unter Scherung. Beim erfindungsgemäßen Verfahren (Beispiele 1 bis 3) ist kein derartiger Kettenabbau festzustellen.

Bei den Vergleichsbeispielen C und E konnten die Liner nur unter schwierigsten Umständen hergestellt werden. Unter anderem musste eine möglichst niedrige Schmelzetemperatur und eine im Bereich der PA12-Schmelztemperatur liegende Düsentemperatur gewählt werden. Zudem war die Wanddickenverteilung unbefriedigend. Die gewählten Verarbeitungsparameter ließen, im Gegensatz zu den Beispielen 1 bis 3, keinen weiteren Spielraum mehr zu.

**Tabelle 1: Herstellung der Compounds**

| | **Compound A** | **Compound B** | **Batch 1** | **Batch 2** |
|---|---|---|---|---|
| Amingeregeltes PA12 [Gew.-%] | 60 | 99,3 | 99,9 | 0 |
| Säuregeregeltes PA12 [Gew.-%] | 40 | 0 | 0 | 98,4 |
| Brüggolen M1251 [Gew.-%] | 0 | 0,6 | 0 | 1,5 |
| Ceasit PC [Gew.-%] | 0 | 0,1 | 0,1 | 0,1 |
| Durchsatz [kg/h] | 10 | 10 | 10 | 10 |
| Schneckendrehzahl [1/min] | 250 | 250 | 250 | 250 |
| Schmelzetemperatur [°C] | 251 | 259 | 249 | 251 |
| Schmelzedruck [bar] | 33 | 62 | 35 | 34 |
| Motorleistung [%] | 73 | 96 | 78 | 72 |
| ηᵣₑₗ gemäß DIN EN ISO 307 | 2,11 | 2,55 | 2,10 | 2,12 |

**Tabelle 2: Verarbeitung zu 32 x 3 mm Inlinern**

| | **Vergleichsbeispiel A** | **Vergleichsbeispiel B** | **Beispiel 1** |
|---|---|---|---|
| Compound A [Gew.-%] | 100 | 0 | 0 |
| Compound B [Gew.-%] | 0 | 100 | 0 |
| Batch 1 [Gew.-%] | 0 | 0 | 60 |
| Batch 2 [Gew.-%] | 0 | 0 | 40 |
| Schneckendrehzahl [1/min] | 37 | 37 | 37 |
| Abzugsgeschwindigkeit [m/min] | 2,3 | 2,3 | 2,3 |
| Düsentemperatur [°C] | 220 | 245 | 245 |
| Schmelzetemperatur [°C] | 232 | 255 | 247 |
| Massedruck [bar] | 58 | 97 | 119 |
| Motorleistung [%] | 64 | 94 | 70 |
| ηᵣₑₗ gemäß DIN EN ISO 307 | 2,08 | 2,30 | 2,51 |

**Tabelle 3: Verarbeitung zu 168,3 x 15,3 mm Inlinern**

| | **Vergleichsbeispiel C** | **Vergleichsbeispiel D** | **Beispiel 2** |
|---|---|---|---|
| Compound A [Gew.-%] | 100 | 0 | 0 |
| Compound B [Gew.-%] | 0 | 100 | 0 |
| Batch 1[Gew.-%] | 0 | 0 | 60 |
| Batch 2 [Gew.-%] | 0 | 0 | 40 |
| Schneckendrehzahl [1/min] | 52 | 66 | 66 |
| Abzugsgeschwindigkeit [m/min] | 0,5 | 0,8 | 0,8 |
| Düsentemperatur [°C] | 180 | 245 | 245 |
| Schmelzetemperatur [°C] | 220 | 260 | 254 |
| Massedruck [bar] | 72 | 130 | 151 |
| Motorleistung [%] | 37 | 98 | 77 |
| ηᵣₑₗ gemäß DIN EN ISO 307 | 2,07 | 2,34 | 2,54 |

**Tabelle 4: Verarbeitung zu 285,0 x 2,0 mm Inlinern**

| | **Vergleichsbeispiel E** | **Vergleichsbeispiel F** | **Beispiel 3** |
|---|---|---|---|
| Compound A [Gew.-%] | 100 | 0 | 0 |
| Compound B [Gew.-%] | 0 | 100 | 0 |
| Batch 1 [Gew.-%] | 0 | 0 | 60 |
| Batch 2 [Gew.-%] | 0 | 0 | 40 |
| Schnecken drehzahl [1/min] | 25 | 44 | 44 |
| Abzugsgeschwindigkeit [m/min] | 0,8 | 1,7 | 1,7 |
| Düsentemperatur [°C] | 175 | 245 | 245 |
| Schmelzetemperatur [°C] | 224 | 256 | 247 |
| Massedruck [bar] | 72 | 87 | 103 |
| Motorleistung [%] | 66 | 56 | 40 |
| ηᵣₑₗ gemäß DIN EN ISO 307 | 2,01 | 2,31 | 2,53 |

## Patentansprüche

1. Verwendung eines Formteils als Inliner für eine Rohrleitung, wobei das Formteil aus einer Polyamidformmasse besteht, die durch Zusatz einer Verbindung mit mindestens zwei Carbonateinheiten in einem Mengenverhältnis von 0,005 bis 10 Gew.-%, bezogen auf das Polyamid, auskondensiert wurde, wobei
a) eine Ausgangs-Polyamidformmasse bereitgestellt wurde,
b) eine Vermischung der Ausgangs-Polyamidformmasse und der Verbindung mit mindestens zwei Carbonateinheiten hergestellt wurde,
c) die Vormischung gegebenenfalls gelagert und/oder transportiert wurde und
d) die Vormischung anschließend zum Formteil verarbeitet wurde, wobei erst in diesem Schritt die Aufkondensation erfolgte
und wobei das Formteil ein Rohr oder Schlauch mit einem Außendurchmesser von mindestens 25 mm ist.

2. Verwendung gemäß Anspruch 1,
**dadurch gekennzeichnet,**
**dass** der Außendurchmesser des Formteils mindestens 60 mm beträgt.

3. Verwendung gemäß Anspruch 1,
**dadurch gekennzeichnet,**
**dass** der Außendurchmesser des Formteils mindestens 110 mm beträgt.

4. Verwendung gemäß einem der vorhergehenden Ansprüche,
**dadurch gekennzeichnet,**
**dass** das Polyamid unter Verwendung eines Diamins oder Polyamins als Regler hergestellt wurde.

5. Verwendung gemäß einem der vorhergehenden Ansprüche,
**dadurch gekennzeichnet,**
**dass** die Verbindung mit mindestens zwei Carbonateinheiten als Masterbatch eingesetzt wird.

6. Rohrleitung, die einen gemäß einem der Ansprüche 1 bis 5 verwendeten Inliner enthält.

7. Rohrleitung gemäß Anspruch 6,
**dadurch gekennzeichnet,**
**dass** sie dem Transport von Fernwärme, Frischwasser, Abwasser, Gas, Ölen, Kraftstoffen, Petrochemikalien, Sole, Laugen, abrasiven Medien oder Stäuben dient.

## Claims

1. Use of a moulding as inliner for a pipeline, the moulding comprising a polyamide moulding composition whose molecular weight has been increased by condensation, via addition of a compound having at least two carbonate units in a quantitative proportion of from 0.005 to 10% by weight, based on polyamide, where
a) a starting polyamide moulding composition was provided,
b) a mixture of the starting polyamide moulding composition and of the compound having at least two carbonate units was produced,
c) the premix was, if desired, stored and/or transported, and
d) the premix was then processed to give the moulding, this step being the first in which the increase of molecular weight by condensation occurred,
the moulding being a pipe or hose whose external diameter is at least 25 mm.

2. Use according to Claim 1,
**characterized in that**
the external diameter of the moulding is at least 60 mm.

3. Use according to Claim 1,
**characterized in that**
the external diameter of the moulding is at least 110 mm.

4. Use according to any one of the preceding claims,
**characterized in that**
the polyamide was prepared using a diamine or polyamine as regulator.

5. Use according to any one of the preceding claims,
**characterized in that**
the compound having at least two carbonate units is used in the form of a masterbatch.

6. Pipeline, which contains an inliner used according to any one of Claims 1 to 5.

7. Pipeline according to Claim 6,
**characterized in that**
it serves for the transport of district heating, fresh water, waste water, gas, oils, fuels, petrochemicals, brine, lyes, or abrasive fluids or dusts.

## Revendications

1. Utilisation d'une pièce façonnée comme revêtement interne pour une conduite tubulaire, où la pièce façonnée est constituée par une masse de moulage en polyamide, qui a été condensée par addition d'un composé comprenant au moins deux unités carbonate dans un rapport de quantités de 0,005 à 10% en poids, par rapport au polyamide, où
a) on dispose au préalable une masse de moulage en polyamide de départ,
b) on réalise un mélange de la masse de moulage en polyamide de départ et du composé comprenant au moins deux unités carbonate,
c) on entrepose et/ou on transporte le cas échéant le mélange préalable et
d) on transforme ensuite le prémélange en une pièce façonnée, la condensation n'étant réalisée que dans cette étape
et où la pièce façonnée est un tuyau ou un tuyau flexible présentant un diamètre extérieur d'au moins 25 mm.

2. Utilisation selon la revendication 1, **caractérisée en ce que** le diamètre extérieur de la pièce façonnée est d'au moins 60 mm.

3. Utilisation selon la revendication 1, **caractérisée en ce que** le diamètre extérieur de la pièce façonnée est d'au moins 110 mm.

4. Utilisation selon l'une quelconque des revendications précédentes, **caractérisée en ce que** le polyamide est préparé avec utilisation d'une diamine ou d'une polyamine comme agent de régulation.

5. Utilisation selon l'une quelconque des revendications précédentes, **caractérisée en ce que** le composé comprenant au moins deux unités carbonate est utilisé comme lot-maître.

6. Conduite tubulaire, qui contient un revêtement interne utilisé selon l'une quelconque des revendications 1 à 5.

7. Conduite tubulaire selon la revendication 6, **caractérisée en ce qu'**elle sert au transport de chaleur à distance, d'eau salubre, d'eau usée, de gaz, d'huiles, de carburants, de produits pétrochimiques, de saumures, de lessives, de milieux ou de poussières abrasifs.
